# EUROPÄISCHE PATENTANMELDUNG

(11) **EP 2 246 580 A1**
(43) Veröffentlichungstag der Anmeldung: **03.11.2010**
(21) Anmeldenummer: 09005871.0
(22) Anmeldetag: 28.04.2009
(51) Int. Cl.: F16C 17/24

(54) **Steuerung der Schmiermittelversorgung eines Gleitlagers und Vorrichtung hierzu**

(71) Anmelder: Karlsruher Institut für Technologie, 76131 Karlsruhe (DE)
(72) Erfinder: Burger, Wolfgang, Dr., 76135 Karlsruhe (DE); Dickerhof, Markus, 76137 Karlsruhe (DE)
(74) Vertreter: Ege, Guido

(57) **Zusammenfassung**

Die Erfindung betrifft ein Verfahren und eine Vorrichtung (1) zur Steuerung der Schmiermittelversorgung eines Gleitlagers (2) mit einer von einer Steuereinheit (13) gesteuerten Dosiervorrichtung (7) für das Schmiermittel und einer Erfassungseinrichtung (14) zur Erfassung von Schallemissionen. Zur einfacheren Überwachung und einer Vorbeugung von Lagerschäden bei Vermeidung von durch überflüssiges Schmiermittel verursachte Reibungswiderstände wird vorgeschlagen, mittels der Steuereinheit aus von der Erfassungseinrichtung erfassten, von Reibungszuständen des Gleitlagers abhängigen Signalen ein Steuersignal zu ermitteln und mittels des Steuersignals die Dosiervorrichtung zu steuern.

## Beschreibung

Die Erfindung betrifft ein Verfahren zur Steuerung der Schmiermittelversorgung eines Gleitlagers mit einer von einer Steuereinheit gesteuerten Dosiervorrichtung für das Schmiermittel und einer Erfassungseinrichtung zur Erfassung von Schallemissionen und eine Vorrichtung hierzu sowie ein Gleitlager mit einer derartigen Vorrichtung.

Geschmierte Gleitlager sind essentielle Komponenten im Maschinenbau, insbesondere in großen Maschinen wie beispielsweise großen Dieselmotoren wie Schiffsdieselaggregaten, Turbinen, Maschinen für die Herstellung von Papier, Druckmaschinen und dergleichen. Dabei erfolgt ein Verdrehen der Gleitlagerbauteile auf einem Schmierfilm. Die Gleitlager werden dabei durch entsprechendes Vorhalten von Schmiermittel in einem Reibungszustand der Flüssigreibung mittels eines Schmierfilms betrieben. Ist dieser aufgebraucht, geht das Gleitlager von einem Reibungszustand der Flüssigreibung in einen Zustand der Mischreibung über, der zu einem raschen Verschleiß zwischen den gegeneinander verdrehten Bauteilen des Gleitlagers und schließlich zum Ausfall des Gleitlagers führt.

Eine Diagnose des Reibverhaltens von Gleitpaarungen mittels einer Schallemissionsanalyse ist aus der Veröffentlichung Sturm, A.; Uhlemann, S.: "Diagnostik an Gleitpaarungen durch Schallemissionsanalyse" in Maschinenbautechnik 34 (1985), Nr. 3, Seiten 129 - 132 bekannt. Gezeigt wird, wie Störungen von Gleitpaarungen mittels eines geänderten Schallemissionsverhaltens gegenüber einer einwandfreien Gleitpaarung unterschieden werden können. Maßnahmen zur Verhinderung der Störungen werden nicht explizit aufgezeigt.

Zur Verhinderung eines Verschleißes und gegebenenfalls nachfolgenden Lagerschäden ist allerdings eine effektive und zuverlässige Schmierung der Gleitlager von großer Bedeutung. Es werden daher Dosiervorrichtungen verwendet, die eine Überversorgung der Gleitlager mit Schmiermittel zur sicheren Schmierung im Reibungszustand der Flüssigreibung vorsehen. Hierbei tritt aufgrund der Überdosierung des Schmiermittels eine beispielsweise durch Planschverluste, Walkarbeit des viskosen Schmiermittels zur Kompensation dessen innerer Reibung oder andere Einflüsse bewirkte hydrodynamische Reibung auf, die den Wirkungsgrad der Gleitlager erheblich mindert und einen unnötig hohen Aufwand an Schmiermittel und zu dessen Handling in Umgebungen mit hohen Reinheitsanforderungen und zu dessen Entsorgung erfordert.

Weiterhin ist aus der WO02/061297 A1 ein Verfahren zur Überwachung eines Gleitlagers gezeigt, bei dem die Temperatur des Schmiermittels eines Abströmkanals gemessen und aus der Temperatur Rückschlüsse auf die Funktionsfähigkeit des Gleitlagers geschlossen werden. Eine Steuerung der Schmiermittelzufuhr über einen Zufuhrkanal und eine Ableitung von Schmiermittel über den Abströmkanal erfolgt abhängig von dem in dem Gleitlager herrschenden Druck und nicht abhängig von der für die Beurteilung des Lagerzustands ermittelte Größe in Form der Temperatur.

Daraus ergibt sich die Aufgabe, ein Verfahren, eine Vorrichtung und ein Gleitlager vorzuschlagen, bei denen eine Steuerung der Schmiermittelzufuhr abhängig von einer Stellgröße erfolgt, die zur Verhinderung einer unerwünschten hydrodynamischen Reibung im Zusammenhang mit der vorhandenen Schmiermittelmenge steht. Dabei sollen nach Möglichkeit keine Veränderungen in dem Gleitlager vorgenommen werden müssen.

Die Aufgabe wird durch ein Verfahren zur Steuerung der Schmiermittelversorgung eines Gleitlagers mit einer von einer Steuereinheit gesteuerten Dosiervorrichtung für das Schmiermittel und einer Erfassungseinrichtung zur Erfassung von Schallemissionen gelöst, wobei mittels der Steuereinheit aus von der Erfassungseinrichtung erfassten, von Reibungszuständen des Gleitlagers abhängigen Signalen ein Steuersignal ermittelt wird und mittels des Steuersignals die Dosiervorrichtung gesteuert wird. Das Verfahren nutzt dabei direkt die durch Schallemissionen erzeugten, für den Reibungszustand des Gleitlagers charakteristischen Körperschall-Signale zur Steuerung der Schmiermittelzufuhr. Dabei erfolgt eine Auswertung dieser Körperschall-Signale durch die Erfassungseinrichtung, indem beispielsweise durch einen Vergleich mit empirischen Daten ein bevorstehendes Verlassen eines Reibungszustands mit Flüssigreibung, also einen Verlust des vom Schmiermittel zwischen den beiden zueinander verdrehbar angeordneten Bauteilen des Gleitlagers ausgebildeten Schmierfilms detektiert wird. Zur Plausibilisierung der Richtigkeit des Steuerverfahrens kann die Temperatur des Lagers oder eines Schmiermittelabflusses ermittelt werden. Sollte diese über einem vorgegebenen Wert einer Betriebstemperatur ohne Verschleiß sein, können Notfallmaßnahmen eingeleitet werden, beispielsweise können ein Warnsignal und/oder eine von dem Verfahren ungeregelte Zufuhr von Schmiermittel erfolgen. Es versteht sich, dass unter dem Begriff "Steuerung" der Schmiermittelzufuhr insbesondere eine "Regelung" mit einer für die Zufuhr des Schmiermittels aus den Körperschall-Signalen und gegebenenfalls weiteren Einflussgrößen ermittelten Stellgröße in einer Regelschleife zu verstehen ist.

Unter Steuereinheit ist dabei eine elektronische Einheit zu verstehen, die Hardware- und Softwarekomponenten aufweisen kann, die die zur Steuerung der Dosiereinrichtung notwendigen Rechenoperationen durchführen kann, über Eingänge zumindest für die Erfassungseinrichtung und Ausgänge zur Steuerung der Dosiervorrichtungen und gegebenenfalls über Speichereinrichtungen zur Speicherung von relevanten Daten und Anzeigevorrichtungen zur Darstellung und Druck von relevanten Informationen aufweist. Die Dosiervorrichtung kann eine Druckversorgungseinrichtung wie Pumpe enthalten, die das Schmiermittel mit Druck beaufschlagt. Das so verdichtete Druckmittel wird in der Dosiervorrichtung beispielsweise mittels eines Ölers oder eines Zuführkanals auf das Gleitlager gegeben, wobei der Druckversorgungseinrichtung ein Ventil nachgeschaltet sein kann, das von der Steuereinheit gesteuert wird. Alternativ kann der von der Druckversorgungseinrichtung erzeugte Druck von der Steuereinheit direkt an der Druckversorgungseinrichtung eingestellt werden. Andere Arten der Beschaltung und Ausführung der Dosiervorrichtung sind von der Erfindung umfasst.

Die Ermittlung und Auswertung eines Reibungszustands des Gleitlagers erfolgt in vorteilhafter Weise anhand von Schallemissionen, die beispielsweise laufend oder in kurzen Zeitabständen intermittierend mittels der Erfassungseinrichtung erfasst werden. Dabei wird ein Übergang des Gleitlagers von einem Reibungszustand einer Mischreibung in einen Reibungszustand einer Flüssigkeitsreibung ermittelt, indem den einzelnen Reibungszuständen diskrete Schallemissionsphänomene zugeordnet werden. Beispielsweise kann die Entwicklung des Reibungskoeffizienten über die Relativgeschwindigkeit der gegeneinander drehenden Bauteile eines Gleitlagers - beispielsweise dargestellt durch die Stribeck-Kurve - dargestellt werden, indem den einzelnen Paarungen des Reibkoeffizienten und der Relativgeschwindigkeit ein Schallemissionsverhalten zugeordnet wird, so dass je nach Art der Schallemissionen ein Reibzustand der Flüssigreibung mit intaktem Schmierfilm und einer Mischreibung mit einem sich auflösenden Schmierfilm und ein dazwischen liegender Ausklinkpunkt erfasst und ermittelt werden können. Dabei hat sich als vorteilhaft erwiesen, wenn ausgehend von dem Reibzustand der Flüssigkeitsreibung in regelmäßigem Abstand unter Auswertung der Schallemissionen bis an den Ausklinkpunkt oder kurzzeitig in besonderen Ausnahmefällen, beispielsweise während einer übergangsweisen oder unzulässigen Regelsituation, die zu einer sofortigen Plausibilisierung des Regelverfahren führen kann, in die Mischreibung gefahren und dann eine geeignete Menge Schmiermittel dosiert wird, um den Reibzustand der Mischreibung oder den Ausklinkpunkt nur in geringer Weise zu überfahren, so dass das Gleitlager ohne oder nur mit geringer hydrodynamischer Reibung betrieben werden kann. In idealer Weise wird auf den Ausklinkpunkt geregelt, indem bei Verlassen des Ausklinkpunktes Schmiermittel dosiert wird.

Die Ermittlung des Steuersignals kann durch einen Vergleich von empirisch ermittelten und in einem Speicher abgelegten Referenzsignalen mit aktuell von der Erfassungseinrichtung erfassten Signalen erfolgen. Dabei können beispielsweise als Referenzsignale im Neuzustand ermittelte Schallemissionsgrößen in einem Speicher oder als Formel hinterlegt sein, die mit aktuellen Signalen der Erfassungseinrichtung zur Erfassung von Schallemissionen verglichen werden. Die Referenzwerte können durch Adaption an den Alterungszustand des Gleitlagers angepasst werden, indem beispielsweise ein alterungstypisches Schallemissionsverhalten über die Betriebsdauer des Gleitlagers gelegt wird.

Die Erfassungseinrichtung zur Erfassung der Schallemissionen kann aus einem oder mehreren, beispielsweise zu einem Array verschalteten Schallsensoren gebildet sein. Es hat sich dabei aufgrund der auftretenden, für den Wechsel der Reibzustände typischen Frequenzen eine Erfassung von Schallemissionen im Ultraschallbereich als vorteilhaft erwiesen. Es werden daher in bevorzugter Weise ein oder mehrere Ultraschallsensoren eingesetzt. In bevorzugter Weise werden Schallemissionen mit Frequenzen in einem Frequenzbereich von 20 kHz bis 500 kHz, bevorzugt 50 kHz bis 150 kHz umfasst. In vorteilhafter Weise kann zur Ermittlung der Steuersignale für die Dosiereinrichtung eine Bewertung der Schallemissionen mittels einer Fast-Fourier-Analyse vorgenommen werden. Dabei kann eine Beschränkung auf eine oder mehrere Leitfrequenzen des Fourier-Spektrums erfolgen, so dass in entsprechend kurzen Auswertungsraten mit damit verbundenen kurzen Regelstrecken in Echtzeit oder lediglich geringer Totzeit bei Bedarf Schmiermittel nachdosiert werden kann.

Die Aufgabe wird weiterhin durch eine Vorrichtung zur Steuerung der Schmiermittelversorgung eines Gleitlagers mit einer von einer Steuereinheit gesteuerten Dosiervorrichtung zur Schmierung des Gleitlagers, einer Erfassungseinrichtung zur Erfassung von Schallemissionen gelöst, mittels der das erfindungsgemäße, vorgehend beschriebene Verfahren durchgeführt wird. Für derartige Verfahren hat sich dabei als besonders vorteilhaft erwiesen, wenn der oder die Sensoren zur Erfassung der Schallemissionen benachbart zum Gleitlager angeordnet werden. Es hat sich gezeigt, dass die Erfassung der Signale der Schallemissionen auch in ausreichendem Maße erfolgen kann, wenn die Sensoren nicht unmittelbar an dem Gleitlager angeordnet sind. Demzufolge können die Gleitlager ohne bauliche Einschränkungen mit einer derartigen Vorrichtung versehen werden, was eine weitegehende freie gestalterischen Möglichkeit neuer Gleitlager und die Nachrüstung bereits eingebauter Gleitlager ermöglicht. Weiterhin können Gleitlager völlig gekapselt, beispielsweise ohne Kabeldurchführungen und dergleichen vorgesehen werden. Eine Anordnung einer Erfassungseinrichtung außerhalb der Kapselung ist dabei besonders vorteilhaft.

Die Aufgabe wird weiterhin durch ein Gleitlager mit zwei koaxial zueinander verdrehbaren Bauteilen gelöst, wobei zwischen den beiden Bauteilen ein aus Schmiermittel gebildeter Schmierfilm vorgesehen ist und das Gleitlager eine Vorrichtung zur Schmiermittelversorgung wie vorgehend beschrieben aufweist. Ein derartiges Gleitlager kann vorteilhafterweise groß dimensioniert werden und in entsprechenden Anwendungen wie Dieselmotoren, Turbinen, Generatoren und anderen Maschinen eingesetzt werden. Diese können beispielsweise eine stationäre Lagerhülse und eine in dieser rotierenden Welle aufweisen, wobei der Wellendurchmesser der Welle größer 50 mm sein kann.

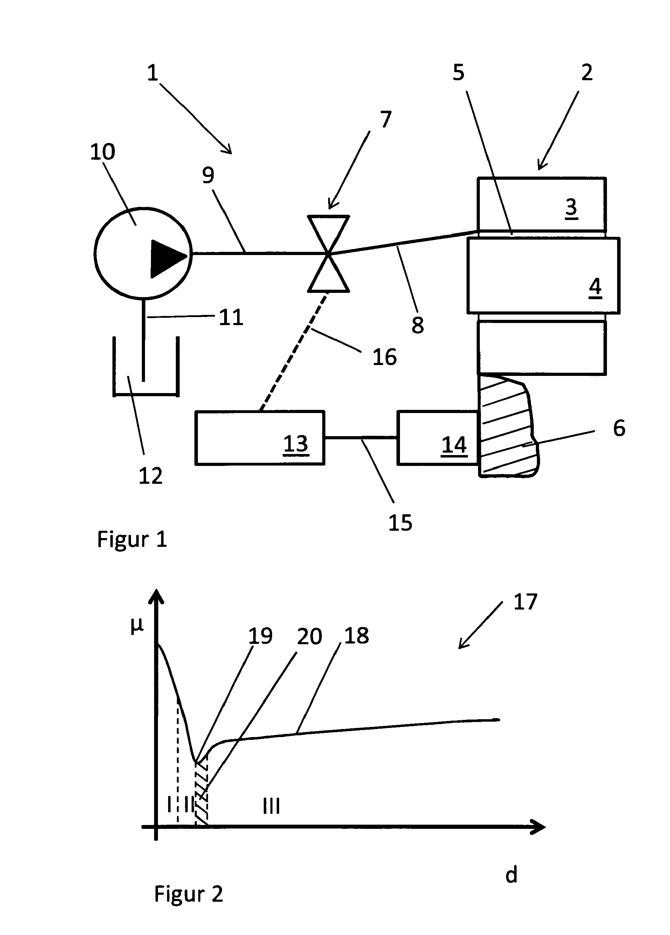

Die Erfindung wird anhand der Figuren 1 und 2 näher erläutert. Diese zeigen:
- Figur 1: eine systematisch dargestellte Anordnung einer Vorrichtung zur Schmiermittel- versorgung eines Gleitlagers
- und:
- Figur 2: ein Diagramm zur Darstellung des Reibungsverhaltens eines Gleitlagers.

Figur 1 zeigt eine Vorrichtung 1 zur Steuerung einer Schmiermittelversorgung des Gleitlagers 2. Das aus einer Lagerhülse 3 und einer sich in dieser drehenden Welle 4 gebildete Gleitlager 2 weist einen Schmierspalt 5 auf, in dem sich bei ausreichender Schmiermittelmenge ein Schmierfilm ausbildet, auf dem die Welle 4 in der Lagerhülse 3, die beispielsweise aus zwei Lagerschalen gebildet sein kann, gleitet. Gegebenenfalls vorhandene Gleitmittelschichten, in denen das Schmiermittel bevorratet werden kann und die Notlaufeigenschaften bei fehlendem Schmiermittel mit gegenüber Metall/Metall-Reibung vermindertem Reibungskoeffizienten ermöglichen, sind nicht dargestellt. Das Gleitlager 2 ist an einem Gehäuse 6 aufgenommen und kann gegenüber diesem gekapselt sein.

Das Gleitlager wird mittels der Dosiervorrichtung 7, die ein hydraulisches Ventil wie Stufen- oder Proportionalventil sein kann, mit Schmiermittel versorgt. Dabei ist bevorzugt zwischen der Dosiervorrichtung 7 und dem Schmierspalt 5, vorzugsweise über einen in den Schmierspalt 5 mündenden, in der Lagerhülse 3 vorgesehen Druckanschluss eine Dosierleitung 8 vorgesehen, die das Schmiermittel unter Druck in den Schmierspalt presst. Das Schmiermittel wird der Dosiervorrichtung 7 über die Druckleitung 9 zugeführt, die an ihrer anderen Seite mit der Druckversorgungseinrichtung 10, beispielsweise einer hydraulischen Pumpe, verbunden ist. Die Druckversorgungseinrichtung 10 kann zentral für mehrere der Dosiervorrichtungen 7 zur Versorgung mehrerer Gleitlager 2 mit Schmiermittel vorgesehen sein. Über die Ansaugleitung 11 wird das Schmiermittel aus einem Schmiermittelreservoir 12 angesaugt. Das Schmiermittel kann Öl, ein Hydraulikfluid oder ein anderes Fluid mit einer auf die Betriebstemperatur des Gleitlagers 2 angepasster Viskosität sein.

Die Steuerung der Dosiervorrichtung 7 erfolgt mittels der Steuereinheit 13, die über die Datenleitung 15, die eine Draht- oder Funkleitung sein kann, Signale der Erfassungseinrichtung 14 einliest und verarbeitet. Die Erfassungseinrichtung ist bevorzugt beabstandet von dem Gleitlager 2 beispielsweise - wie hier gezeigt - am Gehäuse 6 angeordnet. Die Erfassungseinrichtung 14 erfasst Schallemissionen im Ultraschallbereich und überträgt diese auf die Steuereinheit 13. Steuereinheit 13 und Erfassungseinrichtung 14 können einteilig ausgebildet sein. In der Steuereinheit 13 werden die von der Erfassungseinrichtung 14 übermittelten Signale verarbeitet und ein Steuersignal ermittelt, das über die Steuerleitung 16 die Dosiervorrichtung 7, also den Zufluss von Schmiermittel über die Dosierleitung 8 in den Schmierspalt 5 steuert.

Zur Ermittlung der Steuergröße wird in Verbindung mit Figur 1 auf die Figur 2 verwiesen. Figur 2 zeigt das Diagramm 17 mit einem Graphen 18, der ein Ausführungsbeispiel einer typischen Abhängigkeit des Reibkoeffizienten µ von der Schmierfilmdicke d wiedergibt und die in ihrer Form der Stribeck-Kurve ähnlich ist, die im Gegensatz hierzu den Reibkoeffizienten µ gegen die Relativgeschwindigkeit der beiden gegeneinander verdrehbaren Bauteile eines Gleitlagers wiedergibt. Dabei ist der Reibkoeffizient µ in dem Reibzustand des Haftreibungsbereichs I durch eine verschleißbehaftete Haftreibung bestimmt, während in dem Mischreibungsbereich II Haft- und Flüssigreibung zu beobachten ist, der immer noch eine starke Temperaturerhöhung mit einem verbundenen erhöhten Verschleiß der Gleitbeläge des Gleitlagers 2 bedingt. Im Bereich des Ausklinkpunktes 19 geht die Mischreibung in den Reibungszustand mit Flüssigreibung über, der als Flüssigreibungsbereich III bezeichnet ist. In diesem Bereich sind die Schmiereigeneschaften des Gleitlagers 2 ideal. Bei zunehmender Schmierfilmdicke d nimmt der Reibkoeffizient µ infolge von hydrodynamischer Reibung zu, so dass ein Betrieb des Gleitlagers bei großen Schmierfilmdicken d den Wirkungsgrad des Gleitlagers beträchtlich vermindert. Durch das vorgeschlagene Verfahren kann die Schmiermittel zufuhr so geregelt werden, dass die Schmierfilmdicke d auf den Ausklinkpunkt 19 geregelt werden. Aus Sicherheitsgründen kann der Schmierfilm auf eine Schmierfilmdicke d in dem Regelbereich 20 eingeregelt werden, bei dem die hydrodynamische Reibung noch gering, ein Abdriften der Regelung in eine verschleißbehaftete Mischreibung jedoch ausgeschlossen ist.

Unter der Berücksichtigung von Parametern, die einen Einfluss auf die Körperschal-Signale haben können, beispielsweise die Relativgeschwindigkeiten der Gleitlagerteile, die Temperatur, die am Gleitlager anliegende Last werden die entsprechenden Signale der Schallemissionen von der Erfassungseinrichtung 14 erfasst und in der Steuereinheit 13 ausgewertet. Eine Auswertung der Signale erfolgt beispielsweise mittels der Fast-Fourier-Analyse, wobei bevorzugt ein Stellgröße zur Einhaltung des Ausklinkpunkt 19 oder des Regelbereichs 20 an die Dosiervorrichtung 7 ausgegeben wird und abhängig von der Signalantwort der.Erfassungseinrichtung 14 über eine Regelschleife geregelt wird. Dabei können relativ ermittelte Signale der Erfassungseinrichtung 14 mittels in der Steuereinheit 13 abgelegter Referenzsignale kalibriert beziehungsweise justiert werden. Die Referenzsignale können empirisch ermittelte, geschätzte oder über Modelle nachgebildete Signale sein, die entsprechend dem Alterungszustand des Gleitlagers nachgeführt werden können.

### Bezugszeichenliste

- 1: Vorrichtung
- 2: Gleitlager
- 3: Lagerhülse
- 4: Welle
- 5: Schmierspalt
- 6: Gehäuse
- 7: Dosiervorrichtung
- 8: Dosierleitung
- 9: Druckleitung
- 10: Druckversorgungseinrichtung
- 11: Ansaugleitung
- 12: Schmiermittelreservoir
- 13: Steuereinheit
- 14: Erfassungseinrichtung
- 15: Datenleitung
- 16: Steuerleitung
- 17: Diagramm
- 18: Graph
- 19: Ausklinkpunkt
- 20: Regelbereich
- d: Schmierfilmdicke
- µ: Reibkoeffizient
- I: aftreibungsbereich
- II: Mischreibungsbereich
- III: Flüssigreibungsbereich

## Patentansprüche

1. Verfahren zur Steuerung der Schmiermittelversorgung eines Gleitlagers (2) mit einer von einer Steuereinheit (13) gesteuerten Dosiervorrichtung (7) für das Schmiermittel und einer Erfassungseinrichtung (14) zur Erfassung von Schallemissionen, **dadurch gekennzeichnet, dass** mittels der Steuereinheit (13) aus von der Erfassungseinrichtung (14) erfassten, von Reibungszuständen des Gleitlagers (2) abhängigen Signalen ein Steuersignal ermittelt wird und mittels des Steuersignals die Dosiervorrichtung (7) gesteuert wird.

2. Verfahren nach Anspruch 1, **dadurch gekennzeichnet, dass** mittels der Erfassungseinrichtung (14) ein Übergang des Gleitlagers (2) von einem Reibungszustand einer Mischreibung in einen Reibungszustand einer Flüssigkeitsreibung erfasst wird.

3. Verfahren nach Anspruch 2, **dadurch gekennzeichnet, dass** eine Dosierung von Schmiermittel zur Einstellung eines Reibzustands zwischen Mischreibung und Flüssigkeit erfolgt.

4. Verfahren nach einem der Ansprüche 1 bis 3, **dadurch gekennzeichnet, dass** die Ermittlung des Steuersignals durch einen Vergleich von empirisch ermittelten und in einem Speicher abgelegten Referenzsignalen mit aktuell von der Erfassungseinrichtung (14) erfassten Signalen erfolgt.

5. Verfahren nach einem der Ansprüche 1 bis 4, **dadurch gekennzeichnet, dass** die Erfassungseinrichtung (14) Signale im Ultraschalbereich erfasst.

6. Verfahren nach Anspruch 5, **dadurch gekennzeichnet, dass** der Ultraschallbereich einen Frequenzbereich von 20 kHz bis 500 kHz, bevorzugt 50 kHz bis 150 kHz umfasst.

7. Verfahren nach einem der Ansprüche 1 bis 6, **dadurch gekennzeichnet, dass** das Steuersignal mittels einer Bewertung einer Fast-Fourier-Analyse der von der Erfassungseinrichtung (14) erfassten Signale erfolgt.

8. Vorrichtung (1) zur Steuerung der Schmiermittelversorgung eines Gleitlagers (2) mit einer von einer Steuereinheit gesteuerten Dosiervorrichtung (7) zur Schmierung des Gleitlagers (2), einer Erfassungseinrichtung (14) zur Erfassung von Schallemissionen zur Durchführung des Verfahrens nach einem der Ansprüche 1 bis 7.

9. Vorrichtung (1) nach Anspruch 8, **dadurch gekennzeichnet, dass** die Erfassungseinrichtung (14) beabstandet zu dem Gleitlager (2) angeordnet ist.

10. Vorrichtung (1) nach Anspruch 9, **dadurch gekennzeichnet, dass** die Erfassungseinrichtung (14) außerhalb einer Kapselung des Gleitlagers (2) angeordnet ist.

11. Gleitlager (2) mit zwei koaxial zueinander verdrehbaren Bauteilen, wobei zwischen den beiden Bauteilen ein mit Schmiermittel beaufschlagter Schmierspalt (5) vorgesehen ist, **dadurch gekennzeichnet, dass** das Gleitlager (2) eine Vorrichtung (1) zur Schmiermittelversorgung nach den Ansprüchen 9 oder 10 aufweist.

12. Gleitlager (2) nach Anspruch 11, **dadurch gekennzeichnet, dass** eines der Bauteile eine stationäre Lagerhülse (3) und das andere Bauteil eine in dieser rotierende Welle (4) mit einem Wellendurchmesser größer 50 mm ist.
